# EUROPEAN PATENT APPLICATION

(11) **EP 3 226 050 A1**
(43) Date of publication of application: **04.10.2017**
(21) Application number: 15864004.5
(22) Date of filing: 27.11.2015
(51) Int. Cl.: G02B 7/02, G03B 17/02, H04N 5/225

(54) **IMAGING APPARATUS**

(30) Priority: 27.11.2014 JP 2014240480
(71) Applicant: Panasonic Intellectual Property Management Co., Ltd., Osaka-shi, Osaka 540-6207 (JP)
(72) Inventor: IDA, Tetsuya, Osaka-shi, Osaka 540-6207 (JP); INAGAKI, Tatsuhiko, Osaka-shi, Osaka 540-6207 (JP)
(74) Representative: Schwabe - Sandmair - Marx
(86) International application number: PCT/JP2015/005931
(87) International publication number: WO 2016/084394

(57) **Abstract**

A leg section (141) of a lens barrel (14) is connected to a circuit board (10) with an adhesive (18) applied in a large application amount to have a thickness. Besides, a glass plate (12) is disposed on a light receiving surface side of a solid-state image sensing device (11), and a region of wire bonding between the circuit board (10) and the solid-state image sensing device (11) is sealed with resin (17), and a region surrounding and including the lens barrel (14) and a region surrounding and including the circuit board (10) are sealed with resin.

## Description

### Technical Field

The present invention relates to an imaging apparatus using a solid-state image sensing device such as a CCD (Charge Coupled Device) image sensor or a CMOS (Complementary Metal Oxide Semiconductor) image sensor.

### Background Art

Recently, in accordance with increased performance of an imaging apparatus using a solid-state image sensing device as one described above, electronic equipment equipped with an imaging apparatus including an autofocus mechanism has become widely used.

Patent Literature 1 discloses an imaging apparatus capable of adjusting its position in an optical axis direction by causing a leg section of a lens to abut against a region excluding a light receiving surface of a solid-state image sensing device.

It is necessary to assemble the lens of the imaging apparatus disclosed by Patent Literature 1 in a clean room so as to prevent dust and the like from adhering to the light receiving surface of the solid-state image sensing device, and therefore, this apparatus has a problem in which the production cost is high.

For solving this problem, there is an attempt to produce a sensor unit (it should be noted that a sensor using a solid-state image sensing device is designated as a sensor unit) by mounting a solid-state image sensing device on a circuit board, and with the solid-state image sensing device covered with a cover glass having a reference plane, causing a melted resin to flow around the cover glass, and then curing the resin. According to this attempt, since general semiconductors are produced in a clean room, dust and the like can be preventing from adhering to the light receiving surface of the solid-state image sensing devise thus produced. Besides, since the sensor unit is obtained with the cover glass attached thereto, adhesion of dust and the like can be avoided also during transport and assembly.

### Citation List

### Patent Literature

Patent Literature 1: JP-A-2003-046825

### Summary of Invention

### Technical Problem

This attempt also has, however, a problem in which the number of components is increased and the number of production steps is increased. Besides, since a cured resin generally has poor accuracy (because the resultant surface is not flat but irregular in many cases), positioning is difficult in assembling a lens. Furthermore, if a lens is produced by glass molding in consideration of heat resistance, it is difficult, due to restriction in molding accuracy, to accurately form a flange surface against the focal position of the lens. In this manner, it costs much to prevent dust and the like from adhering to a light receiving surface of a solid-state image sensing device, and besides, it is difficult to accurately adjust an optical axis between the solid-state image sensing device and a lens.

The present invention is devised in consideration of these circumstances, and an object is to provide an imaging apparatus in which adhesion of dust and the like to a light receiving surface of a solid-state image sensing device can be prevented at low cost, and an optical axis can be accurately adjusted between the solid-state image sensing device and a lens.

### Solution to Problem

The imaging apparatus of the present invention includes: a circuit board; a solid-state image sensing device disposed on an upper surface of the circuit board; a lens disposed above and spaced from the solid-state image sensing device; and a lens barrel disposed on the upper surface of the circuit board and that houses the lens, and the lens barrel has a leg section which is at least a part of the lens barrel other than a part of the lens barrel housing the lens, and the leg section is connected to the circuit board with an adhesive applied in a large application amount to have a thickness.

When this structure is employed, the leg section of the lens barrel is connected to the circuit board with the adhesive, and hence, even if a portion on the circuit board where the leg section of the lens barrel is connected is not flat, the lens barrel can be moved with the adhesive adhering thereto because the application amount of the adhesive is large. Thus, an optical axis can be highly accurately adjusted between the solid-state image sensing device and the lens.

In the above-described structure, the solid-state image sensing device is connected to the circuit board by wire bonding.

When this structure is employed, the circuit board and the solid-state image sensing device can be connected with a small area.

In the above-described structure, a region around the solid-state image sensing device including the wire bonding is sealed with resin.

When this structure is employed, adhesion of dust and the like to a light receiving surface of the solid-state image sensing device can be prevented. In addition, a wire used in the wire bonding can be protected, and its mechanical strength can be increased.

In the above-described structure, the application amount of the adhesive is partially changed in accordance with a state of a surface of the circuit board where the leg section of the lens barrel is connected.

When this structure is employed, irregularities on the surface of the circuit board where the leg section of the lens barrel is connected can be absorbed, and the optical axis can be highly accurately adjusted between the solid-state image sensing device and the lens.

In the above-described structure, the leg section of the lens barrel has a level difference in a tip portion thereof.

When this structure is employed, a surface area is increased owing to the level difference provided in the leg section of the lens barrel, and hence, the amount of the adhesive involved can be increased to increase adhesive force.

In the above-described structure, the level difference is a recess part.

When this structure is employed, the surface area is increased owing to the recess provided in the leg section of the lens barrel, and hence, the amount of the adhesive involved can be increased to increase the adhesive force.

In the above-described structure, the level difference is a projection part.

When this structure is employed, the surface area is increased owing to the projection provided in the leg section of the lens barrel, and hence, the amount of the adhesive involved can be increased to increase the adhesive force.

In the above-described structure, the circuit board has a mark indicating a position where the leg section of the lens barrel is connected.

When this structure is employed, the adhesive can be easily applied to the circuit board, and time required for assembling the lens barrel on the circuit board can be shortened.

The imaging apparatus having the above-described structure includes a glass plate disposed on a light receiving surface of the solid-state image sensing device.

When this structure is employed, a problem of the adhesion of dust and the like to the light receiving surface of the solid-state image sensing device can be avoided.

In the above-described structure, the glass plate is a glass plate that blocks infrared.

When this structure is employed, light with infrared blocked can be introduced into the solid-state image sensing device.

The imaging apparatus having the above-described structure includes a holding member sealing, with resin, a region surrounding and including the lens barrel and a region surrounding and including the circuit board.

When this structure is employed, the adhesion of dust and the like to the light receiving surface of the solid-state image sensing device can be prevented, and in addition, the production steps can be reduced, the number of components can be reduced, and the imaging apparatus itself can be made compact.

### Advantageous Effects of Invention

According to the present invention, adhesion of dust and the like to a light receiving surface of a solid-state image sensing device can be prevented at low cost, and an optical axis can be highly accurately adjusted between the solid-state image sensing device and a lens.

### Brief Description of Drawings

[Fig. 1] Fig. 1 is a vertical cross-sectional view illustrating the structure of an imaging apparatus according to one embodiment of the present invention.
[Fig. 2] Figs. 2(a) and 2(b) are vertical cross-sectional views illustrating examples of an increased surface area of a tip portion of a leg section of a lens barrel of the imaging apparatus of Fig. 1.
[Fig. 3] Figs. 3(a) and 3(b) are diagrams illustrating examples of a mark provided on a circuit board of the imaging apparatus of Fig. 1.

### Description of Embodiment

A preferred embodiment for practicing the present invention will now be described in detail with reference to the accompanying drawings.

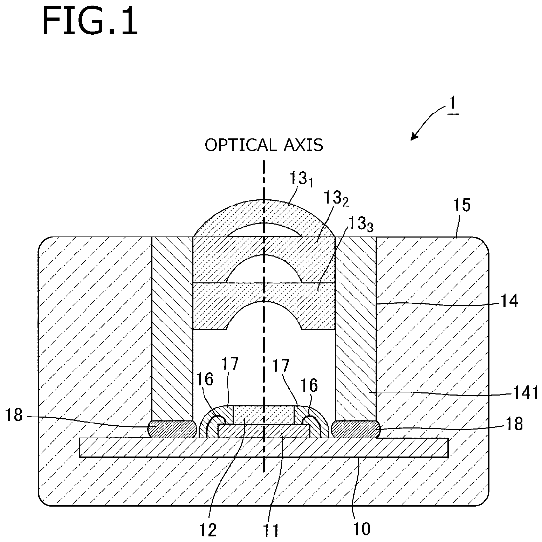

Fig. 1 is a vertical cross-sectional view illustrating the structure of an imaging apparatus according to one embodiment of the present invention. In this drawing, the imaging apparatus 1 of the present embodiment includes a circuit board 10, a solid-state image sensing device 11 disposed in a center portion on an upper surface of the circuit board 10, a glass plate 12 disposed on the upper surface of the solid-state image sensing device 11, a cylindrical lens barrel 14 disposed on the upper surface of the circuit board 10 and housing three lenses 13₁ to 13₃ therein, and a holding member 15 for sealing, with resin, a region surrounding and including the lens barrel 14 and a region surrounding and including the circuit board 10.

The circuit board 10 and the solid-state image sensing device 11 are electrically connected to each other by wire bonding using a wire 16 made of a metal such as gold or copper. Since the wire bonding is employed for the connection between the circuit board 10 and the solid-state image sensing device 11, the circuit board 10 and the solid-state image sensing device 11 can be connected with a small area. A region of the wire bonding between the circuit board 10 and the solid-state image sensing device 11 is sealed with resin 17. Since the region of the wire bonding is sealed with the resin 17, adhesion of dust and the like to the solid-state image sensing device 11 can be prevented. Besides, the wire 16 used for the wire bonding can be protected and can be improved in its mechanical strength. The glass plate 12 has a property of blocking infrared, and is formed to have a size sufficient for covering a light receiving surface of the solid-state image sensing device 11. Since the glass plate 12 is provided on a light receiving surface side of the solid-state image sensing device 11, the adhesion of dust and the like to the light receiving surface of the solid-state image sensing device 11 can be prevented, and external light with infrared blocked can be introduced into the solid-state image sensing device 11.

The lens barrel 14 has a leg section 141 which is a part other than a part of the lens barrel 14 housing the lens 13₁ to 13₃, and the leg section 141 is connected to the circuit board 10 with an adhesive 18. The adhesive 18 is applied in a large application amount so as to have a thickness. Since the adhesive 18 is applied in a large application amount to have a thickness, even if the upper surface of the circuit board 10 has irregularities, the irregularities can be absorbed when the lens barrel 14 is connected to the circuit board 10. In other words, even if there is an error in height on the upper surface of the circuit board 10 in a position where an open end of the lens barrel 14 is placed, the error can be absorbed by the adhesive 18. In addition, the lens barrel 14 can be moved with the adhesive 18 adhering thereto, and hence, an optical axis can be highly accurately adjusted between the solid-state image sensing device 11 and the lenses 13₁ to 13₃.

Incidentally, the thickness of the adhesive 18 can be partially changed instead of being made uniform. Specifically, the thickness is reduced in a position where the height of the upper surface of the circuit board 10 is large, and is increased in a position where the height of the upper surface of the circuit board 10 is small. If the thickness of the adhesive 18 is thus changed in accordance with the height of the upper surface of the circuit board 10, the optical axis can be more highly accurately adjusted.

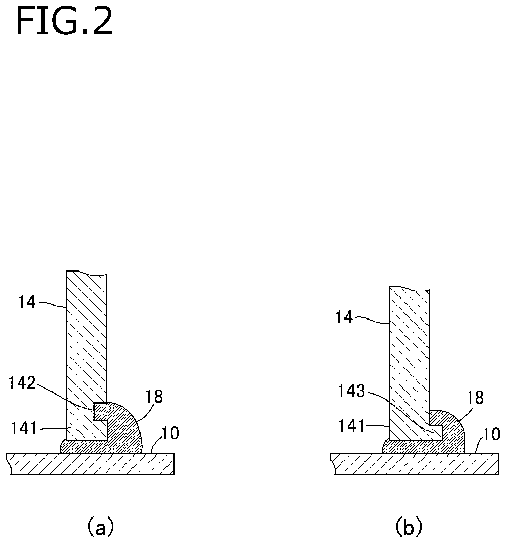

Besides, in order to increase the adhesive force to the leg section 141 of the lens barrel 14, a surface area of a tip portion of the leg section 141 may be increased. Figs. 2(a) and 2(b) are vertical cross-sectional views illustrating examples of an increased surface area of the tip portion of the leg section 141 of the lens barrel 14. Fig. 2(a) illustrates an example in which a recess part 142 is formed in the tip portion of the leg section 141, and Fig. 2(b) illustrates an example in which a projection part 143 is formed in the tip portion of the leg section 141. In both cases, the surface area of the tip portion of the leg section 141 is increased, and hence, the amount of the adhesive 18 involved is increased to increase the adhesive force.

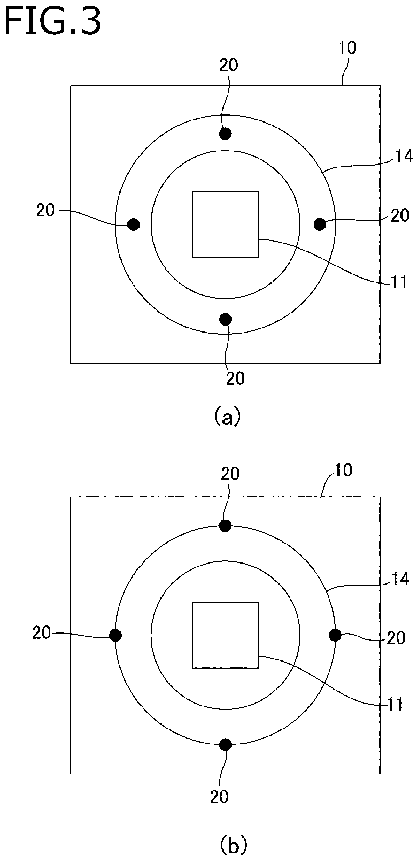

Besides, a mark may be provided on the circuit board 10 so that the leg section 141 of the lens barrel 14 can be easily connected thereto. Figs. 3(a) and 3(b) are diagrams illustrating examples of a mark provided on the circuit board 10. Fig. 3(a) illustrates an example in which four marks 20 are provided at intervals of 90 degrees on a central axis of the position where the open end of the lens barrel 14 is placed, and Fig. 3(b) illustrates an example in which four marks 20 are provided at intervals of 90 degrees on a circumference outside the position where the open end of the lens barrel 14 is placed. If the marks 20 for applying the adhesive 18 are provided on the circuit board 10, the adhesive 18 can be easily applied to the circuit board 10, and time required for adjusting the optical axis can be shortened.

Referring to Fig. 1 again, the holding member 15 is obtained by curing a mold resin having been melted, and seals, with the resin, the region surrounding and including the lens barrel 14 and the region surrounding and including the circuit board 10 as described above. Since the holding member 15 seals, with the resin, the region surrounding and including the lens barrel 14 and the region surrounding and including the circuit board 10, the adhesion of dust and the like to the solid-state image sensing device 11 including the glass plate 12 can be prevented, and in addition, the production steps can be reduced, the number of components can be reduced, and the imaging apparatus 1 itself can be made compact.

In this manner, according to the imaging apparatus 1 of the present embodiment, the lens barrel 14 is connected to the circuit board 10 with the adhesive 18 provided in a large application amount to have a thickness, and hence, even if the upper surface of the circuit board 10 is not flat, the optical axis can be highly accurately adjusted between the solid-state image sensing device 11 and the lenses 13₁ to 13₃. Besides, the glass plate 12 is disposed on the light receiving surface side of the solid-state image sensing device 11, the region of the wire bonding between the circuit board 10 and the solid-state image sensing device 11 is sealed with the resin 17, and the region surrounding and including the lens barrel 14 and the region surrounding and including the circuit board 10 are sealed with the resin. Accordingly, the adhesion of dust and the like to the solid-state image sensing device 11 can be prevented, and in addition, the production steps can be reduced, the number of components can be reduced, and the imaging apparatus 1 itself can be made compact.

Furthermore, since the mark 20 for applying the adhesive 18 is provided in a connection position of the circuit board 10 so that the lens barrel 14 can be easily connected to the circuit board 10, the adhesive 18 can be easily applied, and the time required for adjusting the optical axis can be shortened.

The present invention has been described in detail with reference to the specific embodiment, and it would be apparent for those skilled in the art that various changes and modifications can be made without departing from the spirit and the scope of the present invention.

This application is based upon the Japanese patent application (Japanese Patent Application No. 2014-240480) filed on November 27, 2014, the entire contents of which are incorporated herein by reference.

### Industrial Applicability

The present invention has effects that adhesion of dust and the like to a light receiving surface of a solid-state image sensing device can be prevented at low cost, and that an optical axis can be highly accurately adjusted between the solid-state image sensing device and a lens, and is applicable to an imaging apparatus using a solid-state image sensing device such as a CCD image sensor or a CMOS image sensor.

### Reference Signs List

1 imaging apparatus
10 circuit board
11 solid-state image sensing device
12 glass plate
13₁ to 13₃ lens
14 lens barrel
141 leg section
15 holding member
16 wire
17 resin
18 adhesive
20 mark

## Claims

1. An imaging apparatus, comprising:
a circuit board;
a solid-state image sensing device disposed on an upper surface of the circuit board;
a lens disposed above and spaced from the solid-state image sensing device; and
a lens barrel disposed on the upper surface of the circuit board and that houses the lens,
wherein the lens barrel has a leg section which is at least a part of the lens barrel other than a part of the lens barrel housing the lens, and the leg section is connected to the circuit board with an adhesive applied in a large application amount to have a thickness.

2. The imaging apparatus according to claim 1, wherein the solid-state image sensing device is connected to the circuit board by wire bonding.

3. The imaging apparatus according to claim 2, wherein a region around the solid-state image sensing device including the wire bonding is sealed with resin.

4. The imaging apparatus according to any one of claims 1 to 3, wherein the application amount of the adhesive is partially changed in accordance with a state of a surface of the circuit board where the leg section of the lens barrel is connected.

5. The imaging apparatus according to any one of claims 1 to 4, wherein the leg section of the lens barrel has a level difference in a tip portion thereof.

6. The imaging apparatus according to claim 5, wherein the level difference is a recess part.

7. The imaging apparatus according to claim 5, wherein the level difference is a projection part.

8. The imaging apparatus according to any one of claims 1 to 7, wherein the circuit board has a mark indicating a position where the leg section of the lens barrel is connected.

9. The imaging apparatus according to any one of claims 1 to 8, comprising a glass plate disposed on a light receiving surface of the solid-state image sensing device.

10. The imaging apparatus according to claim 9, wherein the glass plate is a glass plate that blocks infrared.

11. The imaging apparatus according to any one of claims 1 to 10, comprising a holding member sealing, with resin, a region surrounding and including the lens barrel and a region surrounding and including the circuit board.
